# EUROPEAN PATENT APPLICATION

(11) **EP 0 570 169 A1**
(43) Date of publication of application: **18.11.1993**
(21) Application number: 93303570.1
(22) Date of filing: 07.05.1993
(51) Int. Cl.: A01M 1/04, A01M 1/22

(54) **A flying insect control device**

(30) Priority: 09.05.1992 GB 9210035
(71) Applicant: PETER COX GROUP LIMITED, Sutton, Surrey SM1 1NX (GB)
(72) Inventor: Horne, Christopher Gordon, Chieveley, Berkshire, RG16 8XB (GB)
(74) Representative: Ajello, Michael John

(57) **Abstract**

A flying insect control device comprising a high tension electrified grid capable of killing flying insects coming into contact therewith, and located safely within a cage together with at least one insect-attractant fluorescent lamp containing a mixture of phosphors which, when energised, emit light in the ultra-violet, blue and green ranges. Since ultra-violet light is known to attract flying insects in bright conditions and green light will attract them more readily in low ambient light, an overall enhanced insect-attractant irradiance is provided.

## Description

THIS INVENTION concerns a device for attracting and exterminating flying insects.

Electronic and non-chemical devices of this kind are known in which a high tension electrified grid is safely positioned within a cage such that flying insects are killed by flying through the cage and coming into contact with the grid. It is usual for such devices to include insect-attractant lamps which are designed to emit ultra-violet light at a wavelength in the region of 357nM. Research has shown that the attractant performance of such lamps decreases with ambient light levels. Further research revealed that different wavelengths of light will attract insects efficiently at reduced ambient light levels. However, such different wavelengths were found to be unsuitable in average or bright conditions.

It is therefore an object of the present invention to provide a flying insect control device incorporating an insect-attractant lamp which will perform effectively irrespective of ambient light.

According to the present invention there is provided a flying insect control device comprising a high tension electrified grid capable of killing flying insects coming into contact therewith, and at least one insect-attractant fluorescent lamp adapted, when energised, to emit ultra violet light; characterised in that the lamp contains two or more different phosphors at least one of which, when energised, emits green light such that the irradiance emitted by the lamp appears at more than one wavelength, the different phosphors being chosen to attract flying insects at different ambient light levels.

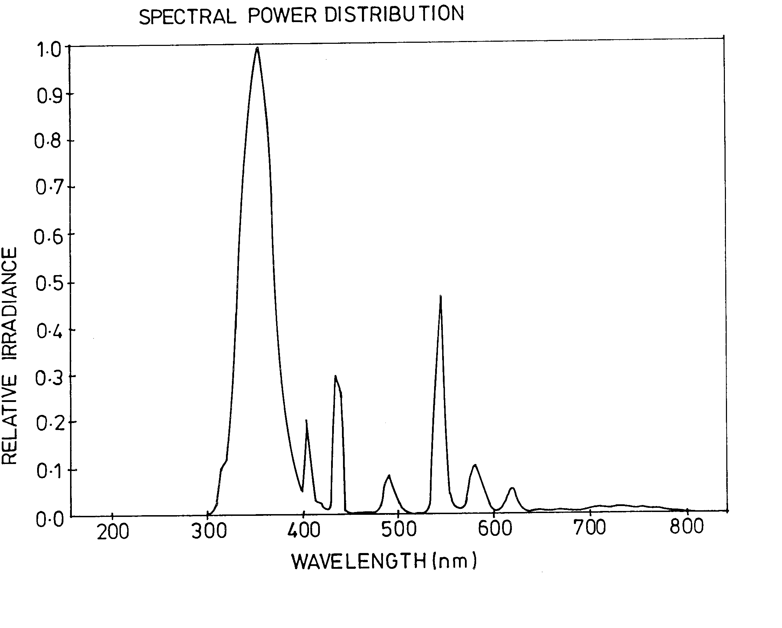

The invention will now be described further, by way of example only, with reference to the accompanying drawing which is a graph of spectral power distribution given as relative irradiance at different wavelengths.

The graph illustrates that a lamp containing a mix of phosphors provides outputs principally at or in the regions of 350nM and 550nM, respectively. Further less significant outputs are obtained at other wavelengths between 400nM and 630nM.

It is known that ultra-violet light emitted at 350nM will attract flying insects efficiently in bright conditions. It has also been established that green light emitted at or in the region of 550nM will produce insect-attractant irradiance in low ambient light conditions.

A test was carried out to verify that a lamp with a phosphor mix as hereinbefore described will operate more efficiently in lower ambient light then a conventional lamp emitting only ultraviolet light at 350nM.

The test was carried out in an enclosed room, without windows or other source of light, the room being approximately 6 metres long, 2 metres high and 2 metres wide, providing a test chamber volume of 25 cubic metres.

The temperature and relative humidity within the test chamber were maintained at 26 + 5°c and 60 + 10%, respectively.

In the test, insect-attractant lamps were fitted into two identical electric fly killer devices, so that one device contained standard ultra-violet lamps, and into the other were fitted lamps containing a mixture or phosphors at least one of which would emit ultra-violet light whilst the other would emit green light.

Test insects were released at a mid-point between the two devices and the numbers caught in each unit were recorded after two hours. The test was repeated several times and the results were recorded as a greater number of insects caught in the device containing mixed phosphor lamps when compared with the other device, at an average ratio of 1.75:1.

Since the only difference between the lamps fitted in the two device were their phosphor contents, it was concluded that the radiation emitted by the mixed phosphors was significantly more attractive to the insects under the test conditions described.

The conventional lamps contained one or more phosphors which would emit light in the ultra-violet and blue ranges whilst the lamps made in accordance with the invention and containing mixed phosphors would emit light in the ultra-violet, blue and green ranges.

The relative proportions within the phosphor mix are selected to provide, as far as possible, optimum irradiance at or close to the wavelengths found to be most attractive to insects under a range of ambient light conditions.

It is conceivable that the phosphor mix may be selected in different proportions according to the intended conditions of use.

## Claims

1. A flying insect control device comprising a high tension electrified grid capable of killing flying insects coming into contact therewith, and at least one insect-attractant fluorescent lamp adapted, when energised, to emit ultra violet light; characterised in that the lamp contains two or more different phosphors at least one of which, when energised, emits green light such that the irradiance emitted by the lamp appears at more than one wavelength, the different phosphors being chosen to attract flying insects at different ambient light levels.

2. A flying insect control device according to Claim 1, wherein the phosphor which emits green light provides an output at or in the region of 550nm, and wherein at least one other phosphor emits ultra-violet light at or in the region of 350nm.

3. A flying insect control device according to Claim 1 or Claim 2, wherein the or at least one of said insect-attractant lamps contains a mixture of phosphors, the phosphor mix in said lamp being chosen to attract flying insects at different ambient light levels.

4. A flying insect control device according to any preceding claim, wherein said phosphors in combination emit light in the ultraviolet, blue and green ranges.

5. A flying insect control device according to Claim 3, wherein the proportions of said phosphor mix are chosen according to a predominant ambient light condition.
